# EUROPÄISCHE PATENTSCHRIFT

(11) **EP 3 348 135 B1**
(45) Veröffentlichungstag und Bekanntmachung des Hinweises auf die Patenterteilung: **30.10.2019**
(21) Anmeldenummer: 18151195.7
(22) Anmeldetag: 11.01.2018
(51) Int. Cl.: A01D 69/03, A01D 41/127

(54) **ANTRIEBSSYSTEM FÜR EINEN ERNTEVORSATZ EINER ERNTEMASCHINE MIT SELBSTTÄTIGER ABSCHALTUNG BEI ÜBERLAST**
DRIVE SYSTEM FOR A HARVESTING ATTACHMENT OF A HARVESTING MACHINE WITH AUTOMATIC SHUT-OFF IN THE CASE OF OVERLOAD
SYSTÈME D'ENTRAÎNEMENT POUR UNE TÊTE DE RÉCOLTE D'UNE MACHINE DE RÉCOLTE À ARRÊT AUTOMATIQUE LORS DE SURCHARGE

(30) Priorität: 11.01.2017 DE 102017200330; 11.08.2017 DE 102017214097
(43) Veröffentlichungstag der Anmeldung: 18.07.2018
(73) Patentinhaber: Deere & Company, Moline, IL 61265 (US)
(72) Erfinder: Bohrer, Stefan, 68163 Mannheim (DE); Schmoening, Christoph, 68163 Mannheim (DE); Stein, Matthias, 68163 Mannheim (DE)
(74) Vertreter: Holst, Sönke

(56) Entgegenhaltungen:
- EP-A1- 1 371 279
- EP-A1- 1 972 190

## Beschreibung

Die Erfindung betrifft ein Antriebssystem für einen Erntevorsatz einer Erntemaschine, umfassend einen Antriebsmotor und einen zwischen den Antriebsmotor und einem oder mehreren angetriebenen Elementen des Erntevorsatzes geschalteten, hydraulischen Antriebsstrang mit einer verstellbaren Hydropumpe und einem Hydromotor sowie eine elektronische Steuereinheit, die mit einem Aktor zur Verstellung der Hydropumpe verbunden ist, sowie eine damit ausgerüstete Erntemaschine.

### Stand der Technik

Selbstfahrende Erntemaschinen sind üblicherweise mit demontierbaren Erntevorsätzen ausgerüstet, die zum Straßentransport von einem an der Vorderseite der Erntemaschine angebrachten Einzugskanal abgenommen werden und bei Bedarf gegen einen anderen Erntevorsatz zur Ernte einer anderen Fruchtart ausgetauscht werden können. Der Antrieb des Erntevorsatzes erfolgt üblicherweise von der Erntemaschine aus und kann einen rein mechanischen Antriebsstrang zwischen dem Antriebsmotor der Erntemaschine und dem Erntevorsatz vorsehen, oder der Erntevorsatz wird mittels eines Hydraulikmotors angetrieben, der durch eine vom Antriebsmotor der Erntemaschine betriebene Hydropumpe mit unter Druck stehendem Hydraulikfluid beaufschlagt wird. Der Hydraulikmotor kann sich an Bord der Erntemaschine oder auf dem Erntevorsatz befinden.

Üblicherweise wird der Antrieb des Erntevorsatzes durch eine mechanische Überlastkupplung (vgl. beispielsweise DE 102 41 216 A1) geschützt. Derartige mechanische Kupplungen sind relativ schwer und kostenträchtig.

Es wurde auch vorgeschlagen, das Drehmoment des Antriebs des Erntevorsatzes durch einen Sensor zu erfassen und bei Überschreiten eines bestimmten Schwellenwertes einen Niederhalter eines Aufnehmers oder eine Haspel eines Schneidwerks selbsttätig anzuheben (DE 102 41 216 A1). Der Bediener kann daraufhin entscheiden, ob der die Erntemaschine anhält und einen Reversiervorgang durchführt oder den Erntevorgang fortsetzt. Ein selbsttätiges Abschalten des Antriebs des Erntevorsatzes ist demnach nicht vorgesehen, was in ungünstigen Situationen zu Beschädigungen des Erntevorsatzes führen kann.

Weiterhin wurde vorgeschlagen, eine Erntemaschine nach Ansprechen eines Metalldetektors selbsttätig anzuhalten (EP 1 997 366 A1) und eine Erntemaschine zu verlangsamen, falls ein erster Soll- oder Grenzwert eines Antriebsmoments des Erntevorsatzes überschritten wird und bei Überschreiten eines zweiten, höheren Grenzwerts den Antriebsstrang des Erntevorsatzes zu unterbrechen (DE 10 2014 109 688 A1). Im Falle der EP 1 997 366 A1 findet kein Schutz gegen Überlastung des Erntevorsatzes statt und bei DE 10 2014 109 688 A1 sind relativ aufwändige Überlastkupplungen zur mechanischen Erfassung des Antriebsmoments des Erntevorsatzes vorgesehen.

Die DE 10 2013 214 986 A1 zeigt die Merkmale des Oberbegriffes des Anspruchs 1 und beschreibt einen hydrostatischen Antrieb eines Erntevorsatzes, bei dem ein Überlastventil öffnet, sobald ein bestimmter Druck in der zum Hydromotor führenden Leitung überschritten wird, um den zum Antrieb des Erntevorsatzes dienenden Hydromotor und die von ihm angetriebenen Elemente gegen Überlastung zu schützen. Hier verbleibt demnach auch dann, wenn eine Überlast des Erntevorsatzes vorliegt, die z. B. durch eine Verstopfung bedingt sein kann, ein maximales Antriebsmoment des Hydromotors erhalten, was zum Verschleiß des Hydromotors und der von ihm angetriebenen Elemente beiträgt. Ein weiterer Nachteil liegt darin, dass der maximale Druck in der Zufuhrleitung des Hydromotors fest vorgegeben ist, während unterschiedliche Erntevorsätze jedoch unterschiedlicher Abschaltmomente bedürfen. Es kann somit vorkommen, dass das Abschalten des Hydromotors bei einem für den jeweiligen Erntevorsatz zu kleinen Druck erfolgt, d.h. die Durchsatzkapazität des Erntevorsatzes unnötig nach unten begrenzt wird, oder dass es erst bei einem für den jeweiligen Erntevorsatz zu hohem Druck erfolgt, sodass dieser bei höheren Durchsätzen oder einem Stau beschädigt wird.

Die EP 1 371 279 A1 beschreibt eine Erntemaschine, bei welcher der Druck in einem hydrostatischen Antriebsstrang anhand der Drehzahl der Pumpe und der Drehzahl des Motors abgeschätzt wird. Anhand des Drucks kann abgeschätzt werden, ob eine Verstopfung in einem Dresch- und Trennrotor eines Mähdreschers oder an den Vorpresswalzen eines Feldhäckslers vorliegt und ggf. ein Warnsignal an den Bediener gegeben werden. Die EP 1 972 190 A1 schlägt in einem derartigen Fall einer anhand des Hydraulikdrucks erkannten Verstopfung vor, an einem Mähdrescher selbsttätig eine Entstopfungsprozedur des Dresch- und Trennrotors zu starten. Die hier beschriebene Vorgehensweise eignet sich aus den im vorigen Absatz erwähnten Gründen nicht für Erntemaschinen, an denen unterschiedliche Erntevorsätze anbringbar sind. Zudem erfolgt nach EP 1 371 279 A1 nur eine Warnung an den Bediener, was ebenfalls zu den im vorigen Absatz erwähnten Nachteilen führt, und ist die Entstopfungsprozedur der EP 1 972 190 A1 für Erntevorsätze nicht geeignet.

### Aufgabe

Die der Erfindung zu Grunde liegende Aufgabe wird darin gesehen, ein Antriebssystem für einen Erntevorsatz einer Erntemaschine bereitzustellen, bei dem die oben erwähnten Nachteile nicht oder in einem verminderten Maße zu erwarten sind.

### Lösung

Diese Aufgabe wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Ein Antriebssystem für einen Erntevorsatz einer Erntemaschine umfasst einen Antriebsmotor und einen zwischen den Antriebsmotor und einem oder mehreren angetriebenen Elementen des Erntevorsatzes geschalteten, hydraulischen oder hydrostatischen Antriebsstrang mit einer verstellbaren Hydropumpe und einem Hydromotor sowie eine elektronische Steuereinheit, die mit einem Aktor zur Verstellung der Hydropumpe verbunden ist. Der Steuereinheit sind Daten hinsichtlich eines maximalen Antriebsmoments des Erntevorsatzes und mit dem Drehmoments des Hydromotors korrelierte Signale von einem Sensor zuführbar, basierend auf denen die Steuereinheit im Falle einer Überschreitung des maximalen Antriebsmoments den Aktor kommandiert, die Hydropumpe im Sinne einer Abschaltung des Antriebs des Hydromotors zu verstellen.

Mit anderen Worten wird eine mit dem Antriebsmoment des Hydromotors korrelierte Größe beispielsweise mittels eines entsprechenden Drehmomentsensors an der Welle der Hydropumpe oder des Hydromotors oder einer von ihm angetriebenen Welle direkt erfasst, oder diese Größe wird indirekt gemessen, indem z.B. ein hydraulischer Betriebsparameter des hydraulischen Antriebsstrangs und insbesondere der Druck im Hydrauliksystem oder eine andere Größe erfasst wird, aus welcher das Antriebsmoment ableitbar ist, mit dem der Hydromotor die von ihm angetriebenen Elemente des Erntevorsatzes antreibt, wie beispielsweise die Drehzahlen der Pumpe und des Motors (vgl. EP 1 371 279 A1). Zudem wird der Steuereinheit eine Information zugeführt, welches maximale Antriebsmoment (oder eine beliebige, davon abhängige Größe) der Erntevorsatz verarbeiten kann. Anhand des erfassten Sensorwertes kann die Steuereinheit auf das jeweils vorhandene Antriebsmoment des Erntevorsatzes schließen und, falls das maximale Antriebsmoment erreicht oder überschritten ist, den Aktor anweisen, den Druck im Hydraulikkreis abzusenken, um den Hydromotor abzuschalten. Auf diese Weise erübrigen sich mechanische Kupplungen zur Absicherung des Antriebsstranges des Erntevorsatzes und es erfolgt eine selbsttätige Abschaltung im Falle einer Überlastung oder eines Erntegutstaus. Zudem kann dem Bediener ein Warnhinweis gegeben werden, damit er die Erntemaschine anhalten und den Stau von Hand oder durch Reversieren des Erntevorsatzes, ggf. nach Anheben eines Niederhalters beseitigen und nach Ende des Reversierens den Erntebetrieb wieder aufnehmen kann, obwohl eine oder mehrere dieser Maßnahmen auch durch die Steuereinheit veranlasst werden könnte.

Der Hydromotor kann sich an Bord der Erntemaschine oder auf dem Erntevorsatz befinden.

Die Steuereinheit kann mit einem die Vortriebsgeschwindigkeit der Erntemaschine beeinflussenden Aktor verbunden und betreibbar sein, im Falle einer detektierten Überschreitung eines zweiten Antriebsmoments des Erntevorsatzes, das kleiner als das maximale Antriebsmoment ist, den Aktor im Sinne einer Verminderung der Vortriebsgeschwindigkeit zu kommandieren. Auf diese Weise wird einerseits einer Überlastung des Erntevorsatzes und der Erntemaschine mit Erntegut vorgebeugt und andererseits kann eine selbsttätige Regelung der Vortriebsgeschwindigkeit der Erntemaschine im Sinne einer Erzielung eines gewünschten Durchsatzes bewerkstelligt werden.

Der Steuereinheit sind die Daten hinsichtlich des maximalen und ggf. des zweiten Antriebsmoments des Erntevorsatzes durch eine elektronische Speichereinheit des Erntevorsatzes zuführbar oder mittels einer Bedienereingabeeinrichtung eingebbar. Diese Speichereinheit kann auch andere Daten zur erntevorsatzspezifischen Ansteuerung der Erntemaschine, wie Antriebsgeschwindigkeit o.ä. enthalten und über ein Bussystem mit der Steuereinheit verbunden sein.

### Ausführungsbeispiel

Anhand der Abbildungen wird ein Ausführungsbeispiel der Erfindung erläutert. Es zeigen:
- Fig. 1: eine schematische seitliche Ansicht einer selbstfahrenden Erntemaschine in Form eines Feldhäckslers,
- Fig. 2: eine schematische Draufsicht auf das Antriebssystem des Erntevorsatzes der Erntemaschine und die zugehörige Hydraulik, und
- Fig. 3: ein Flussdiagramm, nach dem die Steuereinheit der Erntemaschine arbeitet.

### Erntemaschine und Erntevorsatz

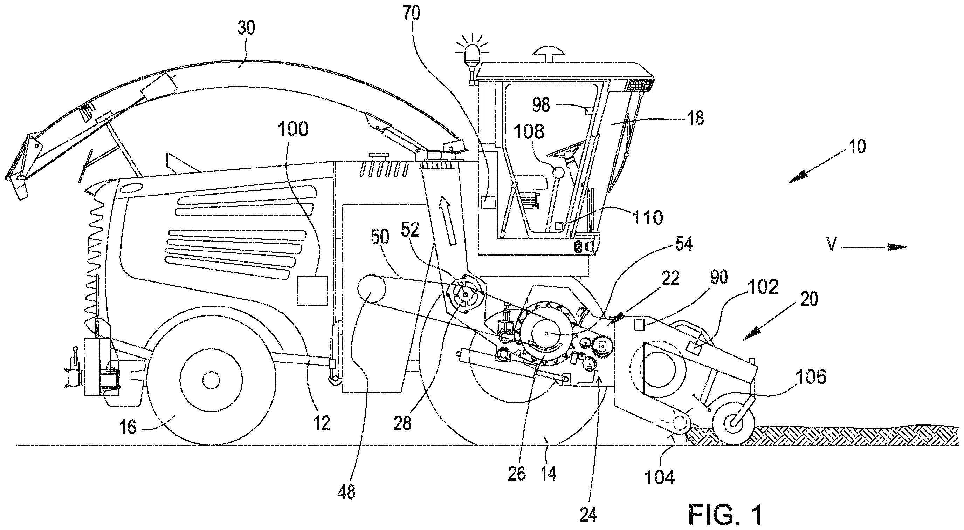

In der Figur 1 ist eine Erntemaschine 10 in der Art eines selbstfahrenden Feldhäckslers in schematischer Seitenansicht dargestellt. Die Erntemaschine 10 baut sich auf einem Rahmen 12 auf, der von vorderen angetriebenen Rädern 14 und lenkbaren rückwärtigen Rädern 16 getragen wird. Die Bedienung der Erntemaschine 10 erfolgt von einer Fahrerkabine 18 aus, von der aus ein Erntevorsatz 20 in Form eines Aufnehmers einsehbar ist. Mittels des Erntevorsatzes 20 vom Boden aufgenommenes Erntegut, z. B. Gras oder dergleichen wird über einen Einzugsförderer 22 mit Vorpresswalzen, die innerhalb eines Einzugsgehäuses 24 an der Frontseite des Feldhäckslers 10 angeordnet sind, einer unterhalb der Fahrerkabine 18 angeordneten Häckseleinrichtung 26 in Form einer Häckseltrommel zugeführt, die es in kleine Stücke häckselt und es einer Fördervorrichtung 28 aufgibt. Das Gut verlässt die Erntemaschine 10 zu einem nebenher fahrenden Transportfahrzeug über einen um eine etwa vertikale Achse drehbaren und in der Neigung verstellbaren Austragschacht 30. Im Folgenden beziehen sich Richtungsangaben, wie seitlich, unten und oben, auf die Vorwärtsrichtung V der Erntemaschine 10, die in der Figur 1 nach rechts verläuft. Ein Niederhalter 106 des Erntevorsatzes 20 ist mittels eines Aktors 102 höhenverstellbar, um den Niederhalter 106 im Erntebetrieb in einer der Aufnehmertrommel 104 des Erntevorsatzes 20 benachbarten Stellung und beim Reversieren in einer demgegenüber angehobenen Stellung positionieren zu können. Der Niederhalter 106 könnte auch als an sich bekannter Rollenniederhalter ausgeführt sein.

### Antriebsanordnung

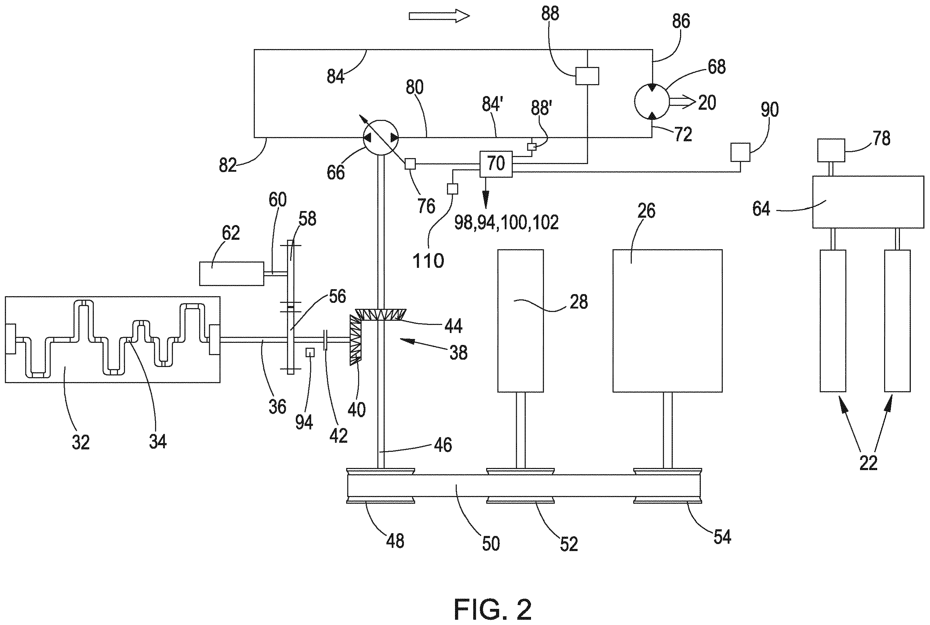

Die Figur 2 zeigt eine Draufsicht auf die Antriebsanordnung der Erntemaschine 10. Im rückwärtigen Bereich der Erntemaschine 10 befindet sich ein als Antriebsmotor dienender Verbrennungsmotor 32 insbesondere in Form eines Dieselmotors, der mit Längsträgern und/oder Querträgern des Rahmens 12 verbunden ist. Der Verbrennungsmotor 32 erstreckt sich in der Vorwärtsrichtung der Erntemaschine 10 bis etwa zum rückwärtigen Ende des Rahmens 12 und umfasst eine Kurbelwelle 34, die sich nach vorn aus dem Gehäuse des Verbrennungsmotors 32 heraus erstreckt. Die Kurbelwelle 34 treibt eine sich horizontal und nach vorn erstreckende Ausgangswelle 36 an.

Die Ausgangswelle 36 ist an ihrem vorderen Ende mit einem Winkelgetriebe 38 verbunden, das sich aus einem ersten Kegelzahnrad 40, welches über eine Kupplung 42 mit der Längswelle 36 verbunden ist, und aus einem zweiten Kegelzahnrad 44 zusammensetzt, das mit dem ersten Kegelzahnrad 40 kämmt. Die Drehachse des zweiten Kegelzahnrads 44 erstreckt sich horizontal und quer zur Vorwärtsrichtung. Das zweite Kegelzahnrad 44 ist mit einer Welle 46 verbunden, die eine Riemenscheibe 48 antreibt. Die Riemenscheibe 48 wird von einem Treibriemen 50 umschlungen, der auch eine Riemenscheibe 52 für den Antrieb der Fördereinrichtung 28 und eine Riemenscheibe 54 zum Antrieb der Häckseleinrichtung 26 umschlingt. Das Winkelgetriebe 38, die Welle 46, die Riemenscheiben 48 und 54 und der Triebriemen 50 bilden einen Antriebsstrang, der die Ausgangswelle 36 mit der Häckseleinrichtung 26 verbindet.

Die Längswelle 36 trägt zwischen der Kupplung 42 und dem Gehäuse des Verbrennungsmotors 32 zusätzlich ein am Umfang verzahntes Zahnrad 56, das mit einem weiteren Zahnrad 58 kämmt, welches über eine Welle 60 ein Pumpenaggregat 62 antreibt, das zur Versorgung der Hydromotoren zum Antrieb der Räder 14, 16, eines über ein Getriebe 64 zum Antrieb des Einzugsförderers 22 dienenden Hydromotors 78 und anderer hydraulisch angetriebener Komponenten der Erntemaschine 10 dient. Einzelheiten zu einem möglichen Antrieb des Hydromotors 78, dessen Pumpe ebenfalls durch die Welle 46 angetrieben werden könnte, lassen sich der DE 10 2013 214 986 A1 und dem dort zitierten Stand der Technik entnehmen. Die Vortriebsgeschwindigkeit der Erntemaschine 10 ist durch einen Aktor 100 steuerbar, der beispielsweise die Stellung einer Schwenkplatte der Pumpe und/oder des Motors im hydrostatischen Antriebssystem der Räder 14 und ggf. 16 beeinflussen kann.

Die Welle 46 steht in der dargestellten Ausführungsform permanent mit einer Hydropumpe 66 mit verstellbarer Verdrängung und Flussrichtung in Antriebsverbindung. Die Hydropumpe 66 ist hydraulikfluidleitend in einem geschlossenen Kreis mit einem Hydromotor 68 verbunden, der ein festes Schluckvolumen aufweist und zum Antrieb der angetriebenen Elemente des Erntevorsatzes 20 dient, bei dem es sich auch um einen Mähvorsatz zur Maisernte oder Erzeugung von Ganzpflanzensilage handeln könnte.

Ein Auslass 82 der Hydropumpe 66 und ein Einlass 86 des Hydromotors 68 sind durch eine erste Druckleitung 84 direkt, d. h. ohne Zwischenschaltung von weiteren Ventilen o. ä., untereinander verbunden. Ein Einlass 80 der Hydropumpe 66 und ein Auslass 72 des Hydromotors 68 sind durch eine zweite Druckleitung 84' direkt, d. h. ohne Zwischenschaltung von Ventilen o. ä. untereinander verbunden. Der Hydromotor 68 kann sich an Bord der Erntemaschine 10 befinden und über eine Kupplungsanordnung mechanisch mit den angetriebenen Elementen des Erntevorsatzes gekoppelt werden (vgl. DE 10 2010 028 605 A1) oder er befindet sich direkt auf dem Erntevorsatz 20 und wird durch die Leitungen 84, 84' mit der Erntemaschine 10 verbunden.

Eine Steuereinheit 70 steuert einen Aktor 76 an, der die Flussrate und Flussrichtung der Hydropumpe 66 beeinflusst. Zudem ist die Steuereinheit 70 mit einem Aktor 94, der die Kupplung 42 öffnet und schließt, mit einer in der Fahrerkabine 18 angeordneten Bedienereingabeeinrichtung 98 mit integrierter Anzeigeeinheit, dem die Vortriebsgeschwindigkeit der Erntemaschine 10 beeinflussenden Aktor 100, dem Aktor 102 des Niederhalters 106 und einem Sensor 110 zur Erfassung der Stellung eines Fahrhebels 108 verbunden.

### Betrieb der Erntemaschine

Die Bedienereingabeeinrichtung 98 ermöglicht es dem Bediener, einen (Straßen-) Fahrbetrieb auszuwählen, in dem die Kupplung 42 geöffnet ist und weder die Häckseleinrichtung 26 noch der Einzugsförderer 22 angetrieben wird, da dann auch der weitere Hydromotor 78 nicht angetrieben wird. Auch die Hydropumpe 66 und somit die angetriebenen Elemente des Erntevorsatzes 20 stehen wegen der geöffneten Kupplung 42 still. Die Räder 14 und ggf. (bei Allradantrieb) auch 16 werden über ihre Hydromotore und das Pumpenaggregat 62 angetrieben.

Weiterhin ermöglicht die Bedienereingabeeinrichtung 98 dem Bediener, eine erste Betriebsart (Erntebetrieb) auszuwählen, in dem die Kupplung 42 geschlossen ist und die Häckseleinrichtung 26 und die Fördervorrichtung 28 über den Triebriemen 50 angetrieben werden. Die Welle 46 treibt dann auch die Hydropumpe 66 an, welche über die erste Leitung 84 den Hydromotor 68 beaufschlagt, der wiederum den Erntevorsatz 20 antreibt. Der Einzugsförderer 22 wird dann vom Pumpenaggregat 62 über den weiteren Hydromotor 78 angetrieben. Der Aktor 76 wird durch die Steuereinheit 70 derart angesteuert, dass sich eine gewünschte Einzugsgeschwindigkeit des Erntevorsatzes 20 ergibt, die durch die Bedienereingabeeinrichtung 98 eingegeben werden kann oder selbsttätig durch die Steuerung anhand von Messwerten von Sensoren vorgegeben wird, die Eigenschaften des Ernteguts erfassen, wie Feuchtigkeit oder Verdichtbarkeit, oder durch in der Speichereinrichtung 90 abgelegte Daten definiert wird. Die Speichereinheit 90 kann mit der Steuereinheit über ein Bussystem verbunden werden.

In der ersten Betriebsart strömt das Hydraulikfluid vom Auslass 82 der Hydropumpe 66 durch die Leitung 84 zum Einlass des Hydromotors 68 und von dessen Auslass 72 durch die Leitung 84' zum Einlass 80 der Hydropumpe. Die Begriffe Einlass und Auslass beziehen sich demnach auf die Flussrichtung des Hydraulikfluids im Erntebetrieb, die auch durch den Pfeil in der Figur 2 repräsentiert wird. Die Steuereinheit 70 ist mit einem Drucksensor 88 verbunden, der den Druck in der Leitung 84 misst.

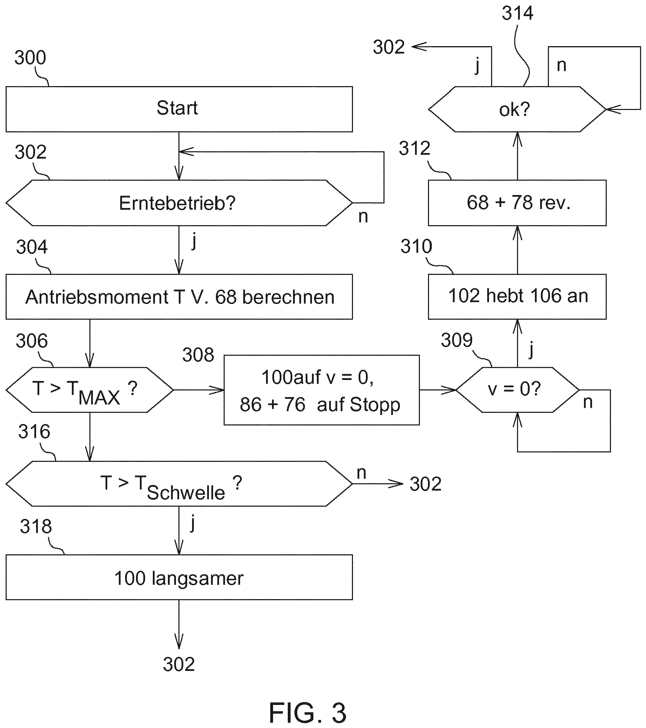

In der ersten Betriebsart (Erntebetrieb) geht die Steuereinheit 70 nach dem Flussdiagramm der Figur 3 vor. Nach dem Start im Schritt 300 wird im Schritt 302 abgefragt, ob die zweite Betriebsart durch den Bediener mittels der Bedienereingabeeinrichtung 98 eingegeben wurde. Ist das nicht der Fall, folgt wieder der Schritt 302 (oder ein anderer Schritt für eine andere Betriebsart). Anderenfalls folgt der Schritt 304, in dem die Steuereinheit 70 das Antriebsmoment τ des Hydromotors 68 berechnet, was anhand des mit dem Drucksensor 88 erfassten Drucks und/oder zusätzlicher Betriebsdaten der Hydropumpe 66 (wie Drehzahl und Stellung der Taumelplatte bzw. des Aktors 76) und/oder des Hydromotors 68, wie dessen Drehzahl erfolgen kann. Demnach berechnet die Steuereinheit 70 während des Erntebetriebs im Schritt 304 das aktuelle Antriebsmoment der vom Hydromotor 68 angetriebenen Elemente des Erntevorsatzes 20. Zudem wird der Steuereinheit 70 von einer elektronischen Speichereinheit 90 des Erntevorsatzes 20 eine Information zugeführt, wie hoch das maximale Antriebsmoment des Erntevorsatzes 20 ist. Sollte das aktuelle Antriebsmoment τ des Erntevorsatzes 20 dessen maximales Antriebsmoment τₘₐₓ überschreiten (Schritt 306), veranlasst die Steuereinheit 70 im Schritt 308 den Aktor 76, den Hydraulikfluss der Hydropumpe 66 abzustellen. Zudem wird eine Warnung an den Bediener über die Anzeigeeinheit der Bedienereingabeeinrichtung 98 ausgegeben, der Aktor 100 angewiesen, die Erntemaschine 10 anzuhalten und ein Aktor angewiesen, den Hydromotor 78 zum Stillstand zu bringen. Der Aktor kann eine Taumelscheibe der dem Hydromotor 78 zugeordneten Pumpe im Pumpenaggregat 62 und/oder des Hydromotors 78 verstellen (vgl. 10 2013 214 986 A1).

Im Falle, dass der Sensor 88 eine Überschreitung des festgelegten Drehmoments des Antriebs des Erntevorsatzes 20 nachweist, wird demnach der Antrieb des Erntevorsatzes 20 und des Einzugsförderers 22 angehalten und die Erntemaschine 10 gestoppt. Es folgt der Schritt 309, in dem abgefragt wird, ob die Geschwindigkeit v der Erntemaschine null ist. Ist das nicht der Fall, folgt wieder der Schritt 309 und anderenfalls der Schritt 310, in dem die Steuereinheit 70 den Aktor 102 anweist, den Niederhalter 106 anzuheben. Im folgenden Schritt 312 werden die den Hydromotoren 68 und 78 zugeordneten Aktoren kommandiert, zunächst den Erntevorsatz 20 und danach den Einzugsförderer 22 in reversierender Weise in einer zweiten Betriebsart anzutreiben, um das gestaute Erntegut auszuwerfen. Im Schritt 314 kann dann nach einer Bestätigungseingabe des Bedieners, gemäß welcher das Problem gelöst wurde, über die Bedienereingabeeinrichtung 98 die erste Betriebsart wieder aufgenommen werden (Schritt 302).

Sollte sich im Schritt 306 ergeben, dass das aktuelle Antriebsmoment τ des Erntevorsatzes 20 dessen maximales Antriebsmoment τₘₐₓ nicht überschreitet, folgt der Schritt 316, in dem geprüft wird, ob das das aktuelle Antriebsmoment τ des Erntevorsatzes 20 ein zweites Antriebsmoment des Erntevorsatzes 20 τ_{Schwelle} überschreitet. Dieses Antriebsmoment wird der Steuereinheit 70 ebenfalls von der elektronischen Speichereinheit 90 übersandt, ist kleiner als τₘₐₓ und entspricht einem optimalen Durchsatz des Erntevorsatzes 20. Ergibt sich im Schritt 316, dass das aktuelle Antriebsmoment τ des Erntevorsatzes 20 das zweite Antriebsmoment des Erntevorsatzes 20 τ_{Schwelle} nicht überschreitet, folgt wieder der Schritt 302 und anderenfalls der Schritt 318, in dem die Steuereinheit 70 den Aktor 100 kommandiert, die Erntemaschine 10 langsamer fahren zu lassen (d.h. ihre Vortriebsgeschwindigkeit v um eine bestimmten Verzögerung zu vermindern). Im Schritt 318 wird die Steuereinheit 70 den Aktor 100 jeweils anweisen, die kleinere Geschwindigkeit auszuwählen, die sich aus Schritt 318 und der mit dem Sensor 110 erfassten Bedienereingabe ergibt. Es ist demnach eine Vortriebgeschwindigkeitsbegrenzung und somit auch Regelung auf das zweite Antriebsmoment des Erntevorsatzes 20 τ_{Schwelle} vorgesehen, die selbsttätig sicherstellt, dass der Durchsatz des Erntevorsatzes 20 dem optimalen Durchsatz entspricht. Auf den Schritt 318 folgt der Schritt 302.

Der Schritt 312 und die Bedienereingabeeinrichtung 98 ermöglichen die Auswahl der zweiten Betriebsart (des Reversiermodus), in dem der Erntevorsatz 20 in gegenüber dem Erntebetrieb umgekehrter Richtung angetrieben wird. Dann veranlasst die Steuereinheit den Aktor 76, die Taumelscheibe der Hydropumpe 66 in eine Position zu verbringen, in welcher die Hydropumpe 66 Hydraulikfluid durch die zweite Leitung 84' zum Hydromotor 68 fördert, welches dann durch die erste Leitung 84 zurück zur Hydropumpe 66 fließt. Auch beim Reversieren könnte ein Drucksensor 88' den Druck in der Leitung 84' überwachen und die Steuereinheit 70 den Aktor 76 veranlassen, die Hydropumpe 76 abzustellen, wenn der Druck in der Leitung 84' darauf hinweist, dass ein maximales Antriebsmoment des Erntevorsatzes 20 überschritten ist. Das in der Speichereinheit 90 festgelegte, maximale Antriebsmoment des Erntevorsatzes 20 kann sich für die zweite Betriebsart von dem maximalen Antriebsmoment des Erntevorsatzes 20 in der ersten Betriebsart unterscheiden und zumindest bei bestimmten Arten von Erntevorsätzen (Mähvorsätze für die Maisernte) größer als bei der ersten Betriebsart sein, um einen erfolgreichen Reversiervorgang nach einer Verstopfung zu ermöglichen. Bei anderen Erntevorsätzen kann das Abschaltmoment beim Reversieren auch kleiner sein (Aufnehmer), um Beschädigungen beim Reversieren zu vermeiden.

Die vorhergehenden Ausführungen gehen davon aus, dass der Druck in der jeweils rückführenden Leitung (84' bei der Ernte und 84 beim Reversieren) sehr gering ist. Sollte diese Annahme nicht zutreffen, kann die Steuereinheit 70 die Druckdifferenz zwischen Einlass 86 und Auslass 72 des Hydromotors 68 anhand der Messwerte beider Drucksensoren 88, 88' erfassen.

### Varianten

Es sei noch angemerkt, dass die Drehmomente τₘₐₓ und τ_{Schwelle} bei Bedarf auch mittels der Bedienereingabeeinrichtung 98 eingegeben oder editiert werden können, z.B. falls der Erntevorsatz 20 keine Speichereinrichtung 90 aufweisen sollte oder eine Anpassung an besondere Erntebedingungen sinnvoll erscheint.

Der Schritt 309 könnte auch entfallen, d.h. das Anheben des Niederhalters 106 und ggf. das Reversieren noch während des Anhaltevorgangs der Erntemaschine 10 gemäß Schritt 308 erfolgen.

Gemäß der Figur 3 wird der Reversiervorgang des Schritts 312 durch die Schritte 308 bis 310 automatisch aufgenommen und im Schritt 314 durch eine Eingabe des Bedieners in die Bedienereingabeeinrichtung 98 beendet. Alternativ oder zusätzlich könnte der Reversierbetrieb des Schritts 312 durch eine Eingabe des Bedieners in die Bedienereingabeeinrichtung 98 aufgenommen werden. Auch wäre es möglich, den Reversiervorgang des Schritts 312 für eine feste oder über die Bedienereingabeeinrichtung 98 einstellbare Zeitdauer durchzuführen oder den Reversiervorgang selbsttätig zu beenden, wenn eine Beseitigung des Staus sensorisch erkannt wurde. Das kann beispielsweise durch eine Drehzahlüberwachung des Abgabeförderers des Erntevorsatzes 20, der bei der vorliegenden Ausführungsform durch eine Querförderschnecke realisiert wird, erfolgen. Sobald sich der Abgabeförderer mit Nenndrehzahl dreht, kann von einer Beseitigung des Staus des Ernteguts ausgegangen und der Reversiervorgang beendet werden. Analog könnte die Beseitigung des Staus durch eine Erfassung des Antriebsmoments des Erntevorsatzes anhand des Sensors 88' oder eines anderen Sensors zur Druck- und/oder Momentüberwachung des Vorsatzantriebs erfolgen. Die Vorgehensweise beim Beenden des Reversierbetriebs wäre demnach analog zur Abschaltung des Vorsatzantriebs bei der Ernte. Schritt 312 würde solange ausgeführt werden, bis die gemessene Druckdifferenz bzw. das abgeleitete Antriebsmoment auf oder unter einen dritten Schwellwert sinkt, welcher dem Leerlaufzustand entspricht.

Der Schritt 314 könnte auch entfallen und der Erntebetrieb nach Beenden des Reversierbetriebs selbsttätig wieder aufgenommen werden.

Es wäre auch denkbar, die Reihenfolge der im Schritt 308 vorgesehenen Maßnahmen einerseits und/oder die Maßnahmen der Schritte 310 und 312 andererseits und ggf. zwischen diesen Maßnahmen vorgesehene Pausen und/oder Bedingungen, die vor einer folgenden Maßnahme erfüllt sein müssen (wie sie im Schritt 309 ausgeführt sind) in der Speichereinrichtung 90 festzulegen und durch die Steuereinheit 70 auslesen zu lassen und/oder über die Bedienereingabeeinrichtung 98 eingeb- und/oder editierbar zu machen, damit sie optimal an den Erntevorsatz 20 und an die Erntemaschine 10 angepasst werden können.

Der Erntevorsatz 20 ist in der dargestellten Ausführungsform ein Aufnehmer. Er könnte auch durch einen Erntevorsatz für Mais (vgl. beispielsweise EP 0 760 200 A1) oder ein Schneidwerk eines Mähdreschers ersetzt werden. Auch könnte die Erntemaschine 10 ein Mähdrescher oder ein Baumwollpflücker oder ein Zuckerrohrernter oder eine Mähmaschine sein, d.h. das Erntegut muss nicht unbedingt vom Erntevorsatz 20 in die Erntemaschine 10 gefördert werden.

### Texte der Figur 3

300 Start
302 Erntebetrieb?
304 Antriebsmoment τ v. 68 berechnen
306 τ > τ max?
308 100 auf v=0, 86+76 auf Stopp
309 v=0?
310 102 hebt 106 an
312 68+78 rev.
314 ok?
316 τ > τSchwelle?
318 100 langsamer

## Patentansprüche

1. Erntemaschine (10) mit einem Erntevorsatz (20) und einem Antriebssystem für angetriebene Elemente des Erntevorsatzes (20), das einen Antriebsmotor (32) und einen zwischen den Antriebsmotor (32) und einem oder mehreren angetriebenen Elementen des Erntevorsatzes (20) geschalteten, hydraulischen Antriebsstrang mit einer vom Antriebsmotor (32) antreibbaren, verstellbaren Hydropumpe (66) und einem Hydromotor (68) sowie eine elektronische Steuereinheit (70) umfasst, die mit einem Aktor (76) zur Verstellung der Hydropumpe (66) verbunden ist, **dadurch gekennzeichnet, dass** die Steuereinheit (70) mit einem zur Erzeugung von mit dem Antriebsmoment des Hydromotors (68) korrelierten Signalen eingerichteten Sensor (88, 88') verbunden ist, dass der Steuereinheit (70) durch eine elektronische Speichereinheit (90) des Erntevorsatzes (20) oder eine Bedienereingabeeinrichtung (98) Daten zuführbar sind, die eine Information darüber enthalten, welches maximale Antriebsmoment der Erntevorsatz (20) verarbeiten kann, und dass die Steuereinheit (70) betreibbar ist, basierend auf den Signalen des Sensors (88, 88') und den Daten, im Falle einer Überschreitung des maximalen Antriebsmoments den Aktor (76) anzuweisen, den Druck im Hydraulikkreis abzusenken, um den Hydromotor (68) abzuschalten.

2. Erntemaschine (10) mit Erntevorsatz (20) nach Anspruch 1, wobei der Sensor (88, 88') eingerichtet ist, einen hydraulischen Betriebsparameter des hydraulischen Antriebsstrangs zu erfassen.

3. Erntemaschine (10) mit Erntevorsatz (20) nach Anspruch 2, wobei der Sensor (88, 88') eingerichtet ist, den am Hydromotor (68) anliegenden Druck zu erfassen.

4. Erntemaschine (10) mit Erntevorsatz (20) nach einem der Ansprüche 1 bis 3, wobei sich der Hydromotor (68) an Bord der Erntemaschine (10) oder auf dem Erntevorsatz (20) befindet.

5. Erntemaschine (10) mit Erntevorsatz (20) nach einem der der vorhergehenden Ansprüche, wobei die Steuereinheit (70) betreibbar ist, im Falle einer detektierten Überschreitung des maximalen Antriebsmoments einen die Vortriebsgeschwindigkeit der Erntemaschine (10) beeinflussenden Aktor (100) anzuweisen, die Erntemaschine (10) anzuhalten und/oder einen mit einem Niederhalter (106) des Erntevorsatzes (20) verbundenen Aktor (102) anzuweisen, den Niederhalter 106) anzuheben und/oder einen Reversiervorgang eines Einzugsförderers (22) der Erntemaschine (10) und/oder des Erntevorsatzes (20) einzuleiten.

6. Erntemaschine (10) mit Erntevorsatz (20) nach Anspruch 5, wobei die Steuereinheit (70) betreibbar ist, einen Reversiervorgang des Erntevorsatzes (20) selbsttätig anhand der Signale des Sensors (88') zu beenden.

7. Erntemaschine (10) mit Erntevorsatz (20) nach Anspruch 5 oder 6, wobei die Reihenfolge der im Falle einer detektierten Überschreitung des maximalen Antriebsmoments des Erntevorsatzes (20) durch die Steuereinheit (70) durchgeführten Maßnahmen und/oder dazwischen liegende Pausen und/oder eine oder mehrere vor der Durchführung einer Maßnahme zu erfüllende Bedingungen durch die Steuereinheit (70) aus einer Speichereinheit (90) des Erntevorsatzes (10) auslesbar und/oder mittels einer Bedienereingabeeinrichtung (98) eingeb- und/oder editierbar sind.

8. Erntemaschine (10) mit Erntevorsatz (20) nach einem der vorhergehenden Ansprüche, wobei die Steuereinheit (70) mit einem die Vortriebsgeschwindigkeit der Erntemaschine (10) beeinflussenden Aktor (100) verbunden und betreibbar ist, im Falle einer detektierten Überschreitung eines zweiten Antriebsmoments des Erntevorsatzes (20), das kleiner als das maximale Antriebsmoment ist, den Aktor (100) zu kommandieren, die Vortriebsgeschwindigkeit (v) der Erntemaschine um eine bestimmte Verzögerung zu vermindern.

9. Erntemaschine (10) mit Erntevorsatz (20) nach Anspruch 8, wobei der Steuereinheit (70) die Daten hinsichtlich des zweiten Antriebsmoments durch eine elektronische Speichereinheit (90) des Erntevorsatzes (20) oder eine Bedienereingabeeinrichtung (98) zuführbar sind.

10. Erntemaschine (10) mit Erntevorsatz (20), wobei die Erntemaschine (10) ein Feldhäcksler ist.

## Claims

1. Harvesting machine (10) having a harvesting attachment (20) and a drive system for driven elements of the harvesting attachment (20), which drive system has a drive motor (32) and a hydraulic drive train, which is connected between the drive motor (32) and one or more driven elements of the harvesting attachment (20) and has an adjustable hydraulic pump (66) which can be driven by the drive motor (32), as well as a hydraulic motor (68), and an electronic control unit (70) which is connected to an actuator (76) for adjusting the hydraulic pump (66), **characterized in that** the control unit (70) is connected to a sensor (88, 88') which is configured to generate signals which are correlated to the drive torque of the hydraulic motor (68), **in that** data which contain information as to what is the maximum drive torque the harvesting attachment (20) can process can be fed to the control unit (70) by an electronic memory unit (90) of the harvesting attachment (20) or an operator control input device (98), and **in that** the control unit (70) can be operated such that in the event of the maximum drive torque being exceeded, said control unit (70) instructs the actuator (76), on the basis of the signals of the sensor (88, 88') and the data, to lower the pressure in the hydraulic circuit in order to switch off the hydraulic motor (68).

2. Harvesting machine (10) having a harvesting attachment (20) according to Claim 1, wherein the sensor (88, 88') is configured to detect a hydraulic operating parameter of the hydraulic drive train.

3. Harvesting machine (10) having a harvesting attachment (20) according to Claim 2, wherein the sensor (88, 88') is configured to detect the pressure present at the hydraulic motor (68).

4. Harvesting machine (10) having a harvesting attachment (20) according to one of Claims 1 to 3, wherein the hydraulic motor (68) is located on board the harvesting machine (10) or on the harvesting attachment (20).

5. Harvesting machine (10) having a harvesting attachment (20) according to one of the of the preceding claims, wherein the control unit (70) can be operated such that, if it is detected that the maximum drive torque is exceeded, said control unit (70) instructs an actuator (100) which influences the propulsion speed of the harvesting machine (10) to stop the harvesting machine (10) and/or to instruct an actuator (102) which is connected to a retaining element (106) of the harvesting attachment (20) to raise the retaining element (106) and/or to initiate a reversing process of a collection conveyor (22) of the harvesting machine (10) and/or of the harvesting attachment (20).

6. Harvesting machine (10) having a harvesting attachment (20) according to Claim 5, wherein the control unit (70) can be operated to end a reversing process of the harvesting attachment (20) automatically on the basis of the signals of the sensor (88').

7. Harvesting machine (10) having a harvesting attachment (20) according to Claim 5 or 6, wherein the sequence of the measures which are executed by the control unit (70) if it is detected that the maximum drive torque of the harvesting attachment (20) is exceeded and/or pauses between said measures and/or one or more conditions to be met before the execution of a measure can be read out from a memory unit (90) of the harvesting attachment (10) by the control unit (70) and/or can be input and/or edited by means of an operator control input device (98).

8. Harvesting machine (10) having a harvesting attachment (20) according to one of the preceding claims, wherein the control unit (70) is connected to an actuator (100) which influences the propulsion speed of the harvesting machine (10), and said control unit (70) can be operated, if it is detected that a second drive torque of the harvesting attachment (20) which is smaller than the maximum drive torque is exceeded, to command the actuator (100) to reduce the propulsion speed (v) of the harvesting machine by a specific deceleration.

9. Harvesting machine (10) having a harvesting attachment (20) according to Claim 8, wherein the data relating to the second drive torque can be fed to the control unit (70) by an electronic memory unit (90) of the harvesting attachment (20) or an operator control input device (98).

10. Harvesting machine (10) having a harvesting attachment (20), wherein the harvesting machine (10) is a field chopper.

## Revendications

1. Machine de récolte (10) comprenant une tête de récolte (20) et un système d'entraînement pour des éléments entraînés de la tête de récolte (20), qui comprend un moteur d'entraînement (32) et une chaîne cinématique hydraulique montée entre le moteur d'entraînement (32) et un ou plusieurs éléments entraînés de la tête de récolte (20), avec une pompe hydraulique (66) réglable, pouvant être entraînée par le moteur d'entraînement (32) et avec un moteur hydraulique (68), ainsi qu'une unité de commande électronique (70) qui est connectée à un actionneur (76) pour le réglage de la pompe hydraulique (66), **caractérisée en ce que** l'unité de commande (70) est connectée à un capteur (88, 88') prévu pour générer des signaux associés au couple d'entraînement du moteur hydraulique (68), **en ce que** des données peuvent être acheminées à l'unité de commande (70) par une unité de mémoire électronique (90) de la tête de récolte (20) ou par un dispositif de saisie d'utilisateur (98), lesquelles données contiennent une information concernant le couple d'entraînement maximal avec lequel la tête de récolte (20) peut travailler, et **en ce que** l'unité de commande (70) peut être utilisée, sur la base des signaux du capteur (88, 88') et des données, dans le cas d'un dépassement du couple d'entraînement maximal, pour commander l'actionneur (76) de manière à ce qu'il abaisse la pression dans le circuit hydraulique afin de couper le moteur hydraulique (68).

2. Machine de récolte (10) comprenant une tête de récolte (20) selon la revendication 1, dans laquelle le capteur (88, 88') est prévu pour détecter un paramètre de fonctionnement hydraulique de la chaîne cinématique hydraulique.

3. Machine de récolte (10) comprenant une tête de récolte (20) selon la revendication 2, dans laquelle le capteur (88, 88') est prévu pour détecter la pression s'exerçant au niveau du moteur hydraulique (68) .

4. Machine de récolte (10) comprenant une tête de récolte (20) selon l'une quelconque des revendications 1 à 3, dans laquelle le moteur hydraulique (68) se trouve à bord de la machine de récolte (10) ou sur la tête de récolte (20).

5. Machine de récolte (10) comprenant une tête de récolte (20) selon l'une quelconque des revendications précédentes, dans laquelle l'unité de commande (70) peut être utilisée, dans le cas de la détection d'un dépassement du couple d'entraînement maximal, pour commander un actionneur (100) influençant la vitesse d'avance de la machine de récolte (10) de manière à ce qu'il arrête la machine de récolte (10) et/ou pour commander un actionneur (102) connecté à un dispositif de maintien vers le bas (106) de la tête de récolte (20) de manière à ce qu'il soulève le dispositif de maintien vers le bas (106) et/ou à ce qu'il amorce une opération d'inversion d'un convoyeur d'amenée (22) de la machine de récolte (10) et/ou de la tête de récolte (20).

6. Machine de récolte (10) comprenant une tête de récolte (20) selon la revendication 5, dans laquelle l'unité de commande (70) peut être utilisée pour terminer automatiquement une opération d'inversion de la tête de récolte (20) à l'aide des signaux du capteur (88').

7. Machine de récolte (10) comprenant une tête de récolte (20) selon la revendication 5 ou 6, dans laquelle la séquence des mesures effectuées dans le cas de la détection d'un dépassement du couple d'entraînement maximal de la tête de récolte (20) par l'unité de commande (70) et/ou des pauses entre celles-ci et/ou une ou plusieurs conditions à satisfaire avant la mise en œuvre d'une mesure peuvent être lues par l'unité de commande (70) dans une unité de mémoire (90) de la tête de récolte (10) et/ou peuvent être saisies et/ou éditées au moyen d'un dispositif de saisie d'utilisateur (98).

8. Machine de récolte (10) comprenant une tête de récolte (20) selon l'une quelconque des revendications précédentes, dans laquelle l'unité de commande (70) est connectée à un actionneur (100) influençant la vitesse d'avance de la machine de récolte (10) et peut être utilisée, dans le cas de la détection d'un dépassement d'un deuxième couple d'entraînement de la tête de récolte (20) qui est inférieur au couple d'entraînement maximal, pour commander l'actionneur (100) de manière à ce qu'il réduise d'un ralentissement déterminé la vitesse d'avance (v) de la machine de récolte.

9. Machine de récolte (10) comprenant une tête de récolte (20) selon la revendication 8, dans laquelle les données concernant le deuxième couple d'entraînement peuvent être acheminées à l'unité de commande (70) par le biais d'une unité de mémoire électronique (90) de la tête de récolte (20) ou d'un dispositif de saisie d'utilisateur (98).

10. Machine de récolte (10) comprenant une tête de récolte (20), la machine de récolte (10) étant une faucheuse-hacheuse.
